# EUROPÄISCHE PATENTSCHRIFT

(11) **EP 0 402 732 B1**
(45) Veröffentlichungstag und Bekanntmachung des Hinweises auf die Patenterteilung: **08.03.1995**
(21) Anmeldenummer: 90110568.4
(22) Anmeldetag: 05.06.1990
(51) Int. Cl.: B60R 16/02

(54) **Schnittstellenschaltung für die Geber einer Fahrzeugachse**
Interface circuit for the sensor of a vehicle axle
Circuit d'interface pour les capteurs d'un essieu de véhicule

(30) Priorität: 16.06.1989 DE 3919712
(43) Veröffentlichungstag der Anmeldung: 19.12.1990
(73) Patentinhaber: Mannesmann Kienzle GmbH (HR B1220), 78052 Villingen-Schwenningen (DE)
(72) Erfinder: Werner, Thomas, Dipl.-Ing., D-7710 Donaueschingen (DE); Hanke, Klaus-Dieter, Dipl.-Ing., D-7730 Villingen-Schwenningen (DE)

(56) Entgegenhaltungen:
- EP-A- 0 266 704
- EP-A- 0 307 634
- WO-A-89/02151

## Beschreibung

Die Erfindung betrifft eine Schnittstellenschaltung für die Geber einer Fahrzeugachse mit einem Mikroprozessor, einem diesem zugeordneten, elektrisch programmierbaren Festwertspeicher und einer Anordnung, die es nach einem Einschreibvorgang gestattet, den Lesezugriff des Mikroprozessors auf den Festwertspeicher zu verzögern.

Bekanntlich ist die ordnungsgemäße Funktion von Bremsen und Radlagern sowie das Vermeiden von Überladungen für die Verkehrssicherheit schwerer Fahrzeuge, insbesondere für die Verkehrssicherheit von Sattelaufliegern und Gespannen von entscheidender Bedeutung. Die Bereitstellung geeigneter Daten ermöglicht ferner eine vorbeugende und eine situationsgerechte Wartung und somit eine Senkung der Betriebskosten sowie eine Minimierung unzulässiger Betriebszustände.

Das heißt, es sind wenigstens die Radlagertemperaturen, die Bremsbelagtemperaturen und der Bremsenverschleiß zu messen, das Überschreiten von Schwellwerten und kritische Betriebszustände in geeigneter Weise dem Fahrer mitzuteilen und als Information für Wartungszwecke und/oder als zusätzliche Information für die Rekonstruktion von Unfallsituationen abzuspeichern.

Eine zweckmäßige Ergänzung dieser Rad-Achse-Betriebsdaten sind Informationen über Beladungs- bzw. Achslastwerte oder lediglich die Angabe von Überschreitungen des zulässigen Gesamtgewichts.

Für eine derartige Datenerfassung in einem extrem rauhen Milieu ist der Aufwand für unmittelbare Leitungsverbindungen der jeweiligen Geber mit einem im Fahrerhaus befindlichen Gerät nicht zuletzt auch wegen der notwendigen Abschirmung, der relativ großen Leitungslänge und der zwischen Zugfahrzeug und Anhänger erforderlichen Steckverbindung unangemessen hoch.

Es ist daher schon vorgeschlagen worden (DE GM 87 12 263) den Gebern einer Achse ein im folgenden als Achsschnittstelle bezeichnetes Gerät zuzuordnen, welches der Geberabfrage und der Signalaufbereitung dient und unmittelbar an der betreffenden Achse, vorzugsweise in der Achsmitte, befestigt wird.

Die Anbringung der Achsschnittstelle unmittelbar an einer Achse und die Aufgabe der Achsschnittstelle, in deren Speicher ein Steuerprogramm für die Geberabfrage und Meßwertverarbeitung sowie verschiedene Anpassungsparameter abgelegt sein müssen, machen es erforderlich, daß einerseits ein möglichst kleiner Bauraum und somit eine weitgehende Bauteilminimierung angestrebt wird, andererseits Teile des Steuerprogramms, unter Umständen das gesamte Steuerprogramm, ausgetauscht und die Anpassungsparameter ergänzt oder ersetzt werden können.

Letztere Bedingung ergibt sich aus der Tatsache, daß beispielsweise Geber ausgetauscht werden müssen, daß für ein Fahrzeug veränderte, z. B. erschwerte Einsatzbedingungen gelten, das Fahrzeug beispielsweise häufig für Paßfahrten eingesetzt wird oder daß mit dem Fahrzeug sicherheitsrelevante Transporte durchgeführt werden. Außerdem können Änderungen des Steuerprogramms und gezielte Anpassungen nach Wartungsmaßnahmen, insbesondere jedoch nach Reparaturen, notwendig werden. Verständlicherweise sind in der Erprobungsphase des Überwachungssystems verschiedene, z. B. anhängerspezifische Anpassungen vorzunehmen. Ferner empfiehlt es sich, bei der Installation der Achsschnittstelle Kennwerte, möglicherweise auch fertigungstechnische Werte für die jeweilige Achse, für deren Lage im Fahrzeug sowie für das Fahrzeug, dem die Achse zugeordnet ist (Baujahr, Seriennummer und dergl.) im Speicher abzulegen.

Eine weitere, einen Schreib-Lese-Speicher erfordernde Bedingung besteht darin, daß während des Fahrzeugbetriebes festgehalten werden muß, daß Warnsignale nicht beachtet worden sind oder daß infolge von Nichtbeachten von Warnsignalen ein erhebliches Überschreiten von vorgegebenen Grenzwerten erfolgte. Diese Informationen müssen der jeweiligen Achse zugeordnet sein, da es in einem Fuhrpark üblich ist, Anhänger und Zugfahrzeuge zu wechseln, oder Anhänger über längere Zeiträume, wenigstens jedoch für Lade- und Entladezeiträume abzustellen. In solchen Fällen ist es ferner von Interesse, die Standzeiten und/oder die zurückgelegten Strecken der Anhänger in das Überwachungskonzept mit einbeziehen zu können.

Die geschilderten Einsatzbedingungen lassen weder die Verwendung eines ROM bzw. PROM, noch die Verwendung beispielsweise eines batteriegepufferten, statischen CMOS-RAM als Speicher für das Steuerprogramm und die übrigen Speicherfunktionen zu, zumal auch ein Öffnen und Schließen des Schnittstellengehäuses im eingebauten Zustand, was beim Austausch einer Batterie oder eines Speicherbausteins erforderlich wäre, zu vermeiden ist, da die Gefahr besteht, daß Undichtigkeiten entstehen.

Als Lösung des dargestellten Problems ist es unter Berücksichtigung der Forderung, die Kosten pro Achse möglichst niedrig zu halten, und des Bauraums wegen denkbar, einen Ein-Chip-Mikroprozessor vorzusehen und diesem, abgesehen von den für die Verknüpfung der Achsschnittstelle mit den Gebern sowie mit Anzeige- und Aufzeichnungsgeräten erforderlichen Schnittstellenbausteinen, lediglich einen elektrisch programmierbaren Festwertspeicher, ein EEPROM, zuzuordnen, welches in heutiger Ausbildung eine für den Anwendungszweck ausreichende Überschreibsequenz aufweist.

Diese Lösung hat jedoch den Nachteil, daß bei den derzeit zur Verfügung stehenden EEPROMs nach einem Einschreibvorgang ein Lesezugriff erst nach einer gewissen Zeit, beispielsweise nach ca. 10 ms., zugelassen werden darf. Das Verharren des Mikroprozessors in einer Warteschleife ist nicht anwendbar, da dies einen Zugriff auf das im EEPROM abgelegte Steuerprogramm voraussetzen würde, andererseits ein zusätzlicher Programmspeicher aus Kosten- und Platzgründen nicht vorgesehen ist.

Bei einem derartigen Konzept besteht somit die Gefahr, daß der Mikroprozessor beim Lesezugriff außer Kontrolle gerät, d. h. ein Programmzählerüberlauf stattfindet und interne Register und Steuerzeichen undefiniert verändert werden.

Es war somit die Aufgabe gestellt, für eine Schnittstellenschaltung mit einem Mikroprozessor und einem EEPROM Maßnahmen zu treffen, damit im Betriebszustand der Schnittstellenschaltung nach einem Einschreibvorgang im EEPROM für eine bestimmte Zeit eine "definierte Beschäftigung" des Mikroprozessors erfolgt.

Die Lösung dieser Aufgabe ist im Patentanspruch 1 definiert und sieht im wesentlichen vor, daß daß ein Zeitgeber vorgesehen ist, der eine Verzögerungszeit vorgibt, daß der Zeitgeber von einer einen Einschreibvorgang erkennenden Torschaltung gesteuert wird und daß mit dem Zeitgeber ein Steuerbefehlgeber verknüpft ist, welcher innerhalb der Verzögerungszeit bei jedem Lesezugriff des Mikroprozessors auf den Festwertspeicher einen Steuerbefehl auf den den Mikroprozessor mit dem Festwertspeicher verbindenden Datenbus schaltet.

Der Vorteil, den die Erfindung bietet, ist darin zu sehen, daß sie es auf besonders einfache Weise ermöglicht, während des Betriebes der Achsschnittstelle und ohne das Gehäuse der Achsschnittstelle zu öffnen, das Programm für die Meßwerterfassung teilweise oder ganz auszutauschen und somit die Meßwerterfassung neuen Erkenntnissen anzupassen, bzw. die relevanten Paramter fahrzeug- und betriebsbezogen zu ändern. Die angestrebte Bauraum- und Kostenminimierung ist insbesondere auch dadurch erzielt worden, daß es die Erfindung ermöglicht, daß für die vorgesehenen Einschreibvorgänge ein zusätzlicher Programmspeicher nicht erforderlich ist.

Im folgenden sei die Schnittstellenschaltung anhand der Zeichnungen näher erläutert. Es zeigen
FIGUR 1 ein Blockschaltbild eines Achskontrollsystems, bei dem lediglich die Betriebsdaten von Anhängerachsen erfaßt werden
FIGUR 2 ein Blockschaltbild einer Schnittstellenschaltung einer Achsschnittstelle.

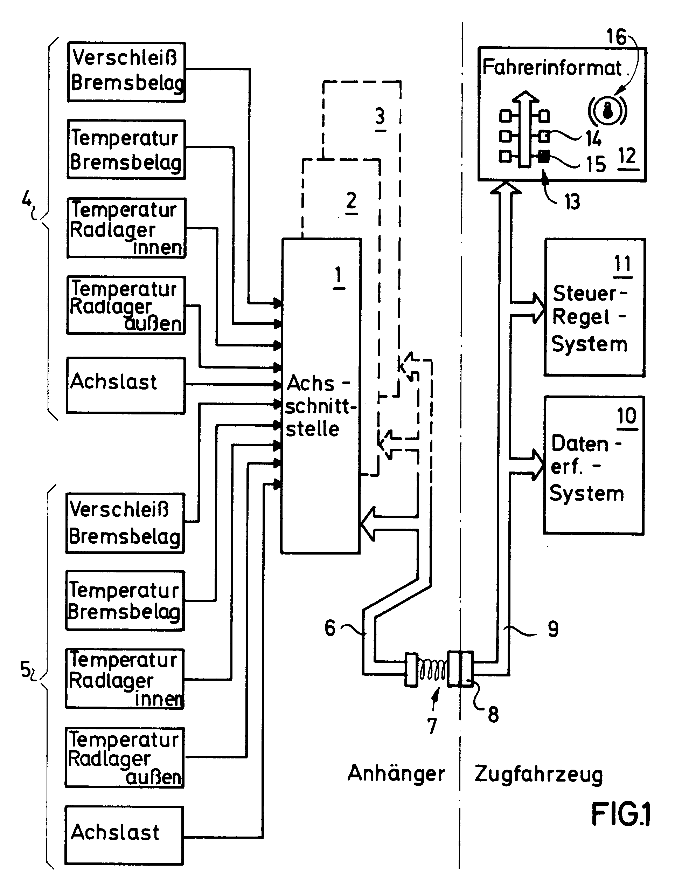

In FIGUR 1 ist mit 1 eine Achsschnittstelle bezeichnet mit der die Abfrage und die Signalaufbereitung der Geber einer Achse erfolgt. Die Achsschnittstelle 1 sowie weitere anderen Achsen, beispielsweise einem Anhänger zugeordnete Achsschnittstellen 2 und 3, sind als Ein-Platinen-Rechner aufgebaut und in einem nicht dargestellten tauch- und schwallwasserdichten Gehäuse, das wie bereits beschrieben, unmittelbar an der betreffenden Achse befestigt wird, angeordnet. Eingangsseitig ist jede Achsschnittstelle 1, 2, 3 mit Gebern 4 und 5 verknüpft, die jeweils jeder Achshälfte bzw. jedem auf der betreffenden Achse gelagerten Rad zugeordnet sind.

Die Geber 4 und 5 erfassen den Verschleiß der Bremsbeläge und die Temperaturen der Bremsbeläge, die Temperaturen der äußeren und inneren Radlager sowie die auf das jeweilige Rad einwirkende Achslast. Zweckmäßig wäre es auch, die Meßgröße "Reifendruck" in das Achskontrollsystem mit einzubeziehen.

Ausgangsseitig liefert jede Achsschnittstelle 1, 2, 3 einen protokollgeführten Signalfluß auf einem die Achsschnittstellen 1, 2, 3 verbindenden, vorzugsweise durch die Gehäuse der Achsschnittstellen 1, 2, 3 durchgeschleiften Leitungsstrang 6, welcher anhängerseitig mit Kupplungsmitteln 7 abschließt, die mit geeigneten zugfahrzeugseitig vorgesehenen Kupplungsmitteln 8 der elektrischen Leitungsverbindung zwischen Zugfahrzeug und Anhänger verbindbar sind.

Die Kupplungsmittel 7 und 8 verbinden die Achsschnittstellen 1, 2, 3 mit einem der Informationsverarbeitung zugeordneten Datenbus 9, über den ein unter anderem der vorbeugenden Wartung dienendes Datenerfassungssystem 10, ein Steuer- und Regelsystem 11, beispielsweise eine Blockierschutzeinrichtung, und eine Signalanzeige 12 für die Fahrerinformation mit den Achsschnittstellen 1, 2, 3 verknüpft sind. Als Signalanzeige 12 dient beispielsweise ein El-Display, mittels dessen eine Fahrzeugsymbolgraphik 13 gebildet werden kann. Soll ein Grenzwert gemeldet werden, so werden innerhalb des betreffenden Radsymbols 14 einige Leuchtelemente zur Bildung einer Leuchtfläche 15 und somit zur Signalgabe angesteuert. Dabei erscheint ein zusätzliches Symbol 16 für die jeweilige Meßgröße des gemeldeten Grenzwertes, in diesem Falle für die Bremsbelagtemperatur. Zur Verdeutlichung des Signaleffektes kann das Symbol 16 intermittierend angesteuert und/oder ein akustisches Signal gegeben werden.

Die auf einer Leiterplatte 17 aufgebaute Schnittstellenschaltung umfaßt einen Mikroprozessor 18 mit einer den Gebern 4 und 5 zugeordneten, Steckverbindungen, Treiber und gegebenenfalls Analog/Digital-Wandler beinhaltenden Eingangsschnittstelle 19 sowie einer Kommunikationsschnittstelle 20, die im wesentlichen der Pegelanpassung dient und über die der protokollgeführte Signalfluß für die Informationsverarbeitung, die Steuer- und Regelzwecke und die Fahrerinformation ausgegeben wird. Mit 21 ist ein Zeitgeber bezeichnet, der im verwendeten 1-Chip-Mikroprozessor 18 integriert sein kann. Ein extern angeordneter und als 1-Byte-Register ausgebildeter Steuerbefehlgeber 22 ist über die Leitung 23 mit dem Ausgang des Zeitgebers 21 und mit dem zwischen dem Mikroprozessor 18 und einem diesem zugeordneten, elektrisch programmierbaren Festwertspeicher 24 vorgesehenen Datenbus 25 verknüpft.

Ferner ist eine Torschaltung 26 vorgesehen, die eingangsseitig über eine Leitung 27 mit einer einen Adressdekoder 28 und den Festwertspeicher 24 verbindenden Auswahlleitung 29 und über eine Leitung 30 mit einer den Mikroprozessor 18 mit dem Festwertspeicher 24 verbindenden Schreibsignalleitung 31 verknüpft ist. Ausgangsseitig steht die Torschaltung 26 über eine Leitung 32 mit dem Steuereingang des Zeitgebers 21 in Verbindung. Der Ausgang des Zeitgebers 21 ist über die Leitung 23 mit dem Steuerbefehlgeber 22 und über die Leitung 33 mit dem Interrupt-Eingang des Mikroprozessors 18 verbunden. Über die Leitung 34 wird dem Zeitgeber 21 der Zähltakt zugeführt, d.h. mit jedem Befehlszyklus des Mikroprozessors 18 wird das Register des Zeitgebers 21 um "1" fortgeschaltet.

Der Vollständigkeit halber sei erwähnt, daß mit 35 eine auf die Funktionseinheiten 19, 21, 22 und 24 verzweigte Lesesignalleitung bezeichnet ist, 36, 37 und 38 weitere mit den Funktionseinheiten 19, 21 und 22 verknüpfte Auswahlleitungen darstellen und mit 39 ein Adressbus bezeichnet ist.

Im folgenden sei die Funktion der beschriebenen Schnittstellenschaltung näher erläutert.

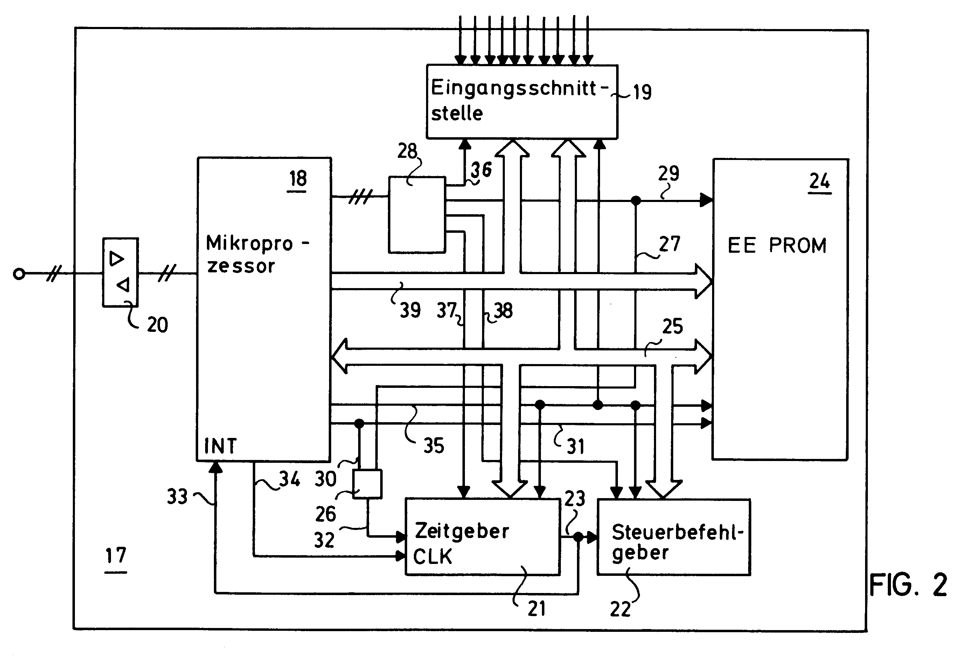

Wird durch den Mikroprozessor 18 ein Einschreibvorgang im Festwertspeicher 24 gestartet und im weiteren Verlauf durchgeführt, so wird dieser Start durch die Torschaltung 26 mit die Verzögerungszeit repräsentierenden Zählwerten geladen und ebenfalls gestartet. Abweichend vom Ausführungsbeispiel gemäß FIGUR 2 besteht der Zeitgeber 21 vorzugsweise aus einem Zählregister und einem diesem zugeordneten Vergleichsregister, die im Mikroprozessor 18 integriert sind. Beim Ansprechen des Zeitgebers 21 setzt der Mikroprozessor 18 ein Statussignal, das einen weiteren Zugriff auf den Festwertspeicher 24 verhindert. Gleichzeitig, d. h. beim Erreichen eines bestimmten ersten Zählerstandes, ändert sich der Spannungspegel auf der Leitung 33, was den Steuerbefehlgeber 22 aktiviert. Wird in diesem Zustand der Festwertspeicher 24 vom Mikroprozessor 18 über die Lesesignalleitung 35 angewählt, um einen Programmbefehl zu holen, so schaltet der ebenfalls mit der Leseleitung 35 verknüpfte Steuerbefehlgeber 22 seinen Inhalt, einen bei der Initialisierungsphase eingeschriebenen 1-Byte-Befehl, auf den Datenbus 25. Dieser Befehl ist derart kodiert, daß weder Registerinhalte des Mikroprozessors 18, noch wichtige Steuerzeichen verändert werden, oder der Programmzähler überläuft.

Beim Erreichen eines zweiten Zählerstandes des Zeitgebers 21, der, wie bereits erwähnt, bei jedem Befehlszyklus des Mikroprozessors 18 um "1" fortgeschaltet wird, d. h. beim Erreichen der gesetzten Zeitgrenze von beispielsweise 10 ms ändert sich der Spannungspegel auf der Leitung 33 erneut. Der Steuerbefehlgeber 22 wird in den Ruhezustand zurückversetzt. Gleichzeitig wird - bei einem gemäß FIGUR 2 externen Zeitgeber 21 über die Leitung 33 - ein Interrupt des Mikroprozessors 18 ausgelöst und das gesetzte Statussignal zurückgesetzt, wodurch ein Zugreifen des Mikroprozessors 18 auf den Festwertspeicher 24 wieder ermöglicht ist.

Während der Interrupt-Routine wird der Fortgang des unterbrochenen Programms anhand der alten Registerwerte sichergestellt und nach dem Ablauf der Interrupt-Routine die Abarbeitung des Meßprogramms weitergeführt.

Die vorgesehene Schnittstellenschaltung und deren Steuerung ermöglichen es, einen Mikroprozessor in einem definierten Zustand zu halten und den Zugriff des Mikroprozessors auf ein als Festwertspeicher zugeordnetes EEPROM nach einem Einschreibvorgang mit relativ geringem Aufwand zu verzögern. Mit anderen Worten, durch die gefundene Lösung ist es überhaupt erst ermöglicht worden, für den geschilderten Anwendungsfall eine mikroprozessorgesteuerte Schnittstelle mit nur einem ungepufferten Schreib-Lese-Speicher zu schaffen, bei der im Betriebszustand Programmänderungen vorgenommen werden können.

## Patentansprüche

1. Schnittstellenschaltung für die Geber einer Fahrzeugachse mit einem Mikroprozessor, einem diesem zugeordneten, elektrisch programmierbaren Festwertspeicher und einer Anordnung, die es nach einem Einschreibvorgang gestattet, den Lesezugriff des Mikroprozessors auf den Festwertspeicher zu verzögern,
dadurch gekennzeichnet,
daß ein Zeitgeber (21) vorgesehen ist, der die Verzögerungszeit vorgibt,
daß der Zeitgeber (21) von einer einen Einschreibvorgang erkennenden Torschaltung (26) gesteuert wird und daß mit dem Zeitgeber (21) ein Steuerbefehlgeber (22) verknüpft ist, welcher innerhalb der Verzögerungszeit bei jedem Lesezugriff des Mikroprozessors (18) auf den Festwertspeicher (24) einen Steuerbefehl auf den den Mikroprozessor mit dem Festwertspeicher (24) verbindenden Datenbus (23) schaltet.

2. Schnittstellenschaltung nach Anspruch 1,
dadurch gekennzeichnet,
daß der Zeitgeber (21) aus einem im Mikroprozessor (18) integrierten Zählregister und einem Vergleichsregister besteht und der extern vorgesehene Steuerbefehlgeber (22) als 1-Byte-Register ausgebildet ist.

3. Schnittstellenschaltung nach Anspruch 1,
dadurch gekennzeichnet,
daß der Ausgang des Zeitgebers (21) sowohl mit dem Steuereingang des Steuerbefehlgebers (22) als auch mit dem Interrupteingang des Mikroprozessors (18) verknüpft ist.

## Claims

1. Interface circuit for the transmitters of a vehicle axle with a microprocessor, an electrically programmable read-only memory which is assigned thereto and an arrangement which enables microprocessor read access to the read-only memory to be delayed after a write procedure,
characterised in that
provision is made for a timing element (21) which predetermines the delay period,
the timing element (21) is controlled by a gate circuit (26) which recognizes a write procedure and
a control instruction generator (22) is connected to the timing element (21), and this control instruction generator (22) switches a control instruction to the data bus (23) connecting the microprocessor to the read-only memory (24) whenever the microprocessor (18) accesses the read-only memory (24) to read it within the delay period.

2. Interface circuit according to Claim 1,
characterised in that
the timing element (21) comprises a counting register which is integral with the microprocessor (18) and a comparison register, and the control instruction generator (22) provided externally is designed as a single-byte register.

3. Interface circuit according to Claim 1,
characterised in that
the output from the timing element (21) is connected to both the control input of the control instruction generator (22) and the interrupt input of the microprocessor (18).

## Revendications

1. Circuit d'interface pour les capteurs d'un axe de véhicule avec un microprocesseur, une mémoire morte électriquement programmable associée à ce dernier et un dispositif qui permet, après un processus d'introduction en mémoire, de retarder l'accès de lecture dudit microprocesseur à ladite mémoire morte,
caractérisé par le fait
qu'il est prévue une horloge (21) qui prédétermine le temps de temporisation,
que ladite horloge (21) est commandée par un circuit de porte (26) détectant un processus d'introduction en mémoire et qu'avec ladite horloge (21) est interconnecté un séquenceur de commande (22) qui applique, pendant le temps de temporisation à chaque accès de lecture du microprocesseur (18) à la mémoire morte (24), une instruction de commande au bus de données (23) reliant ledit microprocesseur (18) à ladite mémoire morte (24).

2. Circuit d'interface selon la revendication 1,
caractérisé par le fait
que l'horloge (21) est constituée d'un registre de comptage intégré dans le microprocesseur (18) et d'un registre de comparaison et que le séquenceur de commande (22) prévu à l'extérieur est réalisé sous la forme d'un registre à 1 octet.

3. Circuit d'interface selon la revendication 1,
caractérisé par le fait
que la sortie de l'horloge (21) est interconnectée aussi bien avec l'entrée de commande du séquenceur de commande (22) qu'avec l'entrée d'interruption du microprocesseur (18).
